# EUROPÄISCHE PATENTSCHRIFT

(11) **EP 0 678 888 B1**
(45) Veröffentlichungstag und Bekanntmachung des Hinweises auf die Patenterteilung: **04.08.1999**
(21) Anmeldenummer: 95103838.9
(22) Anmeldetag: 16.03.1995
(51) Int. Cl.: H01H 47/00, F16P 3/00, F16P 3/20

(54) **Fehlersichere Schaltung**
Fail-safe circuit
Circuit à sécurité intrinsèque

(30) Priorität: 20.04.1994 DE 4413637
(43) Veröffentlichungstag der Anmeldung: 25.10.1995
(73) Patentinhaber: GEBR. SCHMIDT FABRIK FUR FEINMECHANIK, 78112 St Georgen (DE)
(72) Erfinder: Babiel, Hartmut, D-78628 Rottweil (DE); Mauch, Konrad, D-78655 Dunningen (DE)
(74) Vertreter: Otten, Hajo, Dr.-Ing.

(56) Entgegenhaltungen:
- DE-A- 2 208 816
- DE-A- 3 600 173
- US-A- 4 054 935

## Beschreibung

Die vorliegende Erfindung betrifft eine fehlersichere Schaltung, die in Abhängigkeit von einer Quasi-Gleichzeitigkeit zumindest zweier Schaltereignisse zumindest ein weiteres Schaltereignis auslöst, wobei für beide Schaltereignisse ein gemeinsamer Speicher für elektrische Ladung vorgesehen ist und wobei die Schaltereignisse von zumindest zwei, Betätigungsspulen aufweisenden Schaltmitteln ausgelöst werden.

Eine fehlersichere Schaltung der vorgenannten Art ist in der Druckschrift DE 22 08 816 A1 offenbart. Die darin offenbarte Schaltung umfaßt zwei Handtaster, die zwei Schaltmittel aktivieren. Die beiden Schaltmittel sind als Schaltrelais mit Betätigungsspulen realisiert. Wird einer der beiden Handtaster betätigt, so erfolgt eine Entladung eines gemeinsamen elektrischen Ladungsspeichers über eine aus Halbleiter-Bauelementen aufgebaute Konstantstrom-Entladungsstufe. Erfolgt die Betätigung des weiteren Handtasters innerhalb einer durch die Entladezeit vorgegebenen Zeitdauer, so wird ein Maschinenschaltrelais betätigt.

Von derartigen fehlersicheren Schaltungen wird erwartet, daß ein mechanisches und/oder elektrisches Versagen eines der Bauteile der Schaltung nicht zu einem fehlerhaften Auslösen und/oder Nichtauslösen des weiteren Schaltereignisses führt.

Sie werden überall dort eingesetzt, wo es z.B. zum Schutz von Menschen und/oder Maschinen im Berufsalltag darauf ankommt, daß bestimmte Reaktionen nur dann ausgelöst werden, wenn zwei Ereignisse in sehr kurzen Zeitabständen erfolgen. Ist die Zeitspanne zwischen beiden Ereignissen zu groß, soll die Reaktion nicht erfolgen.

Einsatzmöglichkeiten für solche Schaltungen finden sich bei der Überwachung von Endschaltern z.B. für Verschiebetische, Flurförderer, Laufkatzen oder Handhabungsroboter, wo das gleichzeitige Anfahren zweier Extrempositionen eine Reaktion erfordert. Weitere Einsatzmöglichkeiten liegen auf dem Feld der Bedienersteuerungen, wo an zwei voneinander entfernten Orten quasi gleichzeitig je ein Schalter zu betätigen ist. Durch eine Art "Koinzidenzschaltung" soll sichergestellt werden, daß z.B. nicht ein Bediener, der die Schalter entweder nacheinander betätigt oder im Falle von Tastern einen festklemmt, alleine die Reaktion auslösen kann, während der andere Bediener beispielsweise noch an der zu startenden Maschine arbeitet.

Für die Auslegung derartiger Schaltungen hat das Berufsgenossenschaftliche Institut für Arbeitssicherheit in St. Augustin Vorschriften (VDI 2854) veröffentlicht, die angeben, welches Fehlverhalten bezüglich einzelner Bauteile berücksichtigt werden muß. Die Schaltung darf danach kein Fehlverhalten zeigen, wenn eines der verwendeten Bauteile einen der in solchen Fehlerlisten aufgeführten Fehler zeigt. Die Fehlerannahme bei handbetätigten Schaltern und Tastern umfaßt z.B. das Nichtschließen und/oder Nichtöffnen eines Kontaktes, das Nichtbetätigen des Schalters aufgrund mechanischen Versagens oder das Betätigtbleiben des Schalters aufgrund mechanischen Versagens. Bei Relais wird angenommen, daß sie nicht abfallen, nicht anziehen, die Spule oder der Kontaktweg unterbrochen sind, einzelne Kontakte nicht öffnen oder nicht schließen etc.

Bei Drahtwiderständen wird z.B. angenommen, daß der Widerstandswert sich bis zu einem Kurzschluß verringern oder bis zu einem Leerlauf vergrößern kann. Bei Kondensatoren wird eine Drift unterstellt, die zwischen Null und der Nennkapazität liegen kann. Bei Halbleiterbauteilen wird allgemein unterstellt, daß einzelne Anschlüsse unterbrochen werden können, oder daß es zwischen zwei beliebigen Anschlüssen einen Kurzschluß gibt. Bei integrierten Schaltkreisen wird sogar weiter angenommen, daß die gesamte Schaltung ausfallen kann, so daß sicherheitstechnische Signale voneinander getrennt in verschiedenen integrierten Schaltungen verarbeitet werden müssen.

Vor diesem Hintergrund ist es Aufgabe der vorliegenden Erfindung, eine fehlersichere Schaltung bereitzustellen, die den erwähnten berufsgenossenschaftlichen Vorschriften entspricht und insgesamt einen geringen konstruktiven Aufwand erfordert.

Erfindungsgemäß wird diese Aufgabe bei der eingangs genannten fehlersicheren Schaltung dadurch gelöst, daß der für beide Schaltereignisse vorgesehene gemeinsame Speicher mit den Betätigungsspulen von zumindest zwei auslösenden Schaltmitteln derart verschaltet ist, daß er bei Eintritt eines oder beider der Schaltereignisse über eine bzw. beide Betätigungsspulen umgeladen wird, wobei die Schaltmittel das weitere Schaltereignis nur auslösen, wenn sie beide in Arbeitsstellung sind.

Die der Erfindung zugrunde liegende Aufgabe wird auf diese Weise vollkommen gelöst.

Von besonderem Vorteil bei der neuen Schaltung ist, daß die Zeitkonstante bei der Umladung des Speichers nicht über Widerstände herbeigeführt wird sondern über den ohmschen Anteil der Betätigungsspulen. Ein Kurzschluß oder ein Leerlauf bei der Betätigungsspule sorgt in beiden Fällen dafür, daß die zugeordneten Schaltmittel nicht schalten, so daß ein fehlerhaftes Schalten ausgeschlossen ist. Eine geringe Änderung des begleitenden ohmschen Widerstandes bei der Betätigungsspule würde sich ebenfalls deshalb nicht auswirken, weil die zugeordneten dritten oder vierten Schaltmittel dann nicht mehr schalten könnten.

Ein Fehler bei dem Speicher bedeutet, daß die Kapazität kleiner wird, so daß der zulässige Zeitabstand zwischen den beiden Schaltereignissen sich verkürzt. Dies kann jedoch nicht zu einem fehlerhaften Schalten führen sondern höchstens zu einem fehlerhaften Nichtschalten, was aus Sicherheitsgründen jedoch nicht zu beanstanden ist.

Dabei ist es bevorzugt, wenn die Schaltung mit folgenden Merkmalen versehen ist:
- einer ersten Ladestrecke, die den Speicher wahlweise mit einem ersten Potential verbindet,
- einer zweiten Ladestrecke, die den Speicher wahlweise mit einem zweiten Potential verbindet,
- zumindest einer dritten Ladestrecke, die den Speicher wahlweise mit einem dritten Potential verbindet,
- einem ersten, in Abhängigkeit von dem ersten Schaltereignis arbeitenden Schaltmittel, das einen ersten Schaltkontakt in der ersten Ladestrecke und einen zweiten Schaltkontakt in der zweiten Ladestrecke aufweist, und
- zumindest einem zweiten, in Abhängigkeit von dem zweiten Schaltereignis arbeitenden Schaltmittel, das einen ersten Schaltkontakt in der ersten Ladestrecke und einen zweiten Schaltkontakt in der dritten Ladestrecke aufweist,
wobei:
- eines der auslösenden Schaltmittel als drittes Schaltmittel mit seiner Betätigungsspule in der zweiten Ladestrecke liegt und einen ersten Schaltkontakt in der ersten Ladestrecke sowie einen zweiten Schaltkontakt aufweist,
- ein anderes der auslösenden Schaltmittel als viertes Schaltmittel mit seiner Betätigungsspule in der dritten Ladestrecke liegt und einen ersten Schaltkontakt in der ersten Ladestrecke sowie einen zweiten Schaltkontakt aufweist,
- alle ersten Schaltkontakte in der ersten Ladestrecke so verschaltet sind, daß sie ein Laden des Speichers auf das erste Potential nur ermöglichen, wenn sie alle in ihrer Ruhestellung sind,
- die Betätigungsspulen und die zweiten Schaltkontakte der ersten und zweiten Schaltmittel in der zweiten bzw. dritten Ladestrecke so verschaltet sind, daß die zweiten Schaltkontakte in ihrer Arbeitsstellung den Speicher über die jeweilige Betätigungsspule auf das zugeordnete Ladepotential umladen, und
- die zweiten Schaltkontakte des dritten und vierten Schaltmittels derart verschaltet sind, daß das weitere Schaltereignis nur ausgelöst wird, wenn beide zweiten Schaltkontakte in ihrer Arbeitsstellung sind.

In der neuen Schaltung ist von Vorteil, daß nur Bauteile Verwendung finden, die leicht überwacht werden können, oder bei denen das Eintreten der Fehlerannahme nicht zu einem Fehlverhalten der Schaltung führt. Wenn die ersten und zweiten Schaltmittel in Ruhestellung sind, wird der Speicher auf das erste Potential aufgeladen oder auch entladen. Werden jetzt entweder die ersten oder die zweiten Schaltmittel betätigt, so wird zum einen durch den zugeordneten Schaltkontakt in der ersten Ladestrecke dafür gesorgt, daß der Speicher nicht länger mit dem ersten Potential verbunden ist. Darüber hinaus sorgt der zweite Schaltkontakt dafür, daß der Speicher über die zugeordnete Betätigungsspule der dritten oder vierten Schaltmittel auf das zweite oder dritte Potential umgeladen wird. Dieses Umladen erfolgt mit einer Zeitkonstante, die durch die Kapazität des Speichers sowie den ohmschen Widerstand der Betätigungsspule bestimmt wird. Der Stromfluß durch die Betätigungsspule sorgt dafür, daß der zweite Kontakt des dritten oder vierten Schaltmittels schaltet. Wird jetzt das weitere von den ersten und zweiten Schaltmitteln betätigt, so fließt ebenfalls ein Strom durch die andere Betätigungsspule. Je nachdem, wie weit der Speicher bereits umgeladen wurde, wieviel Zeit also seit dem ersten Schaltereignis vergangen ist, reicht dieser weitere Strom dazu aus, das andere von den dritten und vierten Schaltmitteln zu betätigen oder auch nicht. Ist die Zeitspanne kurz genug, so schaltet auch das andere von den dritten und vierten Schaltmitteln, so daß auch dessen zweiter Schaltkontakt arbeitet. Beide zweiten Schaltkontakte der dritten und vierten Schaltmittel lösen nun das weitere Schaltereignis aus.

Sämtliche Schaltmittel sind in der neuen Schaltung stellungsüberwacht; wenn z.B. eines der Schaltmittel hängenbleibt, wird entweder der Speicher nicht wieder auf das erste Potential umgeladen, wenn einer der ersten Schaltkontakte nicht in seine Ruhestellung zurückgeht, oder das weitere Schaltereignis wird nicht erneut ausgelöst, wenn einer der zweiten Schaltkontakte nicht wieder in seine Arbeitsstellung übergeht.

Insgesamt bleibt also festzuhalten, daß die neue Schaltung allen sicherheitstechnischen Anforderungen gerecht wird, wobei insbesondere von Vorteil ist, daß sie ohne Halbleiterbauelemente wie Dioden, Transistoren oder integrierte Schaltungen auskommt, und daß kein ohmscher Widerstand verwendet wird, der nicht selbst in seiner Funktion überwacht wird. Die Funktionsüberwachung bei dem ohmschen Widerstand der Betätigungsspulen besteht hier darin, daß bei einer Änderung des ohmschen Widerstandes die zugeordneten dritten oder vierten Schaltmittel nicht mehr schalten. Ein weiterer Vorteil liegt darin, daß sich die zweite und die dritte Ladestrecke sozusagen gegenseitig verriegeln, weil ein gemeinsamer Speicher vorgesehen ist. Schließlich ist von Vorteil, daß die neue Schaltung mit sehr wenigen Bauteilen auskommt, so daß sie preiswert und kompakt herzustellen ist.

Wenn das zweite und das dritte Ladepotential identisch sind, ist die Zeitspanne zwischen den beiden Schaltereignissen unabhängig davon, ob zuerst die ersten Schaltmittel oder zuerst die zweiten Schaltmittel betätigt wurden. Haben das zweite und das dritte Potential dagegen unterschiedliche Werte, so sind die Zeitabstände verschieden und hängen davon ab, ob zuerst die ersten oder zuerst die zweiten Schaltmittel betätigt wurden.

Allgemein kann das erste Potential sowohl ein Massepotential als auch eine Betriebsspannung der neuen Schaltung sein. Ist das erste Potential ein Massepotential, so wird der Speicher nach dem Schalten der ersten oder zweiten Schaltmittel auf das zweite oder dritte Potential aufgeladen und bei der Rücknahme der ersten und zweiten Schaltmittel wieder gegen Masse entladen. In der Regel werden das zweite und das dritte Potential jedoch Massepotential haben, wobei das erste Potential auf der Betriebsspannung liegt. Im Ruhezustand der neuen Schaltung wird der Speicher dann auf die Betriebsspannung aufgeladen. Beim Schalten der ersten und zweiten Schaltmittel erfolgt dann eine Entladung des Speichers gegen Masse.

Besonders bevorzugt ist es, wenn die ersten und zweiten Schaltkontakte eines jeden Schaltmittels ihren Schaltzustand zwangsgeführt jeweils gemeinsam ändern und insbesondere eine zwangsgeführte Antivalenz aufweisen, so daß die ersten Schaltkontakte geschlossen sind, wenn die zweiten Schaltkontakte geöffnet sind, und umgekehrt.

Hier ist von Vorteil, daß nicht nur ein Hängenbleiben der Schaltmittel als solche sondern sogar unterschiedliches Verhalten der einzelnen Schaltkontakte eines Schaltmittels ausgeschlossen ist. Durch die Zwangsführung ist sichergestellt, daß es bei äquivalent betätigten Schaltkontakten nicht zu einer Antivalenz kommt, und umgekehrt. Mit anderen Worten, wenn einer der Schaltkontakte eines Schaltmittels in seiner richtigen Stellung ist, so kann daraus geschlossen werden, daß dies auch für den anderen Schaltkontakt gilt. Es ist lediglich noch möglich, daß dieser andere Schaltkontakt abgebrochen ist.

Weiterhin ist es bevorzugt, wenn die ersten und zweiten Schaltmittel als Sicherheitstaster und die dritten und vierten Schaltmittel als Sicherheitsrelais ausgebildet sind.

Bei derartigen Schaltern und Relais ist sichergestellt, daß sich lösende leitfähige Teile einen Kontakt nicht überbrücken oder die Isolation zwischen Kontakten nicht überbrücken. Auch dies trägt in vorteilhafter Weise dazu bei, daß die neue Schaltung sehr fehlersicher ist.

Bei einem bevorzugten Ausführungsbeispiel können z.B. alle ersten Schaltkontakte Ruhekontakte sein, die in Serie zwischen das erste Potential und den Speicher geschaltet sind, wobei die zweiten Schaltkontakte der ersten und zweiten Schaltmittel Schließkontakte sein können, die in Serie mit der jeweiligen Betätigungsspule geschaltet sind.

Hier ist von Vorteil, daß der Speicher in Ruhestellung der Schaltmittel aufgeladen und nur in Arbeitsstellung entladen wird. Ein Strom aus dem ersten Potential fließt nur so lange, bis der Speicher aufgeladen ist. Nach dem Schalten der ersten oder zweiten Schaltmittel fließt kein weiterer Strom über die erste Ladestrecke. Dies hat Vorteile bezüglich des Energieverbrauches der neuen Schaltung.

Die zweiten Schaltkontakte der dritten und vierten Schaltmittel können entweder in Serie geschaltete Schließkontakte oder parallel geschaltete Ruhekontakte sein.

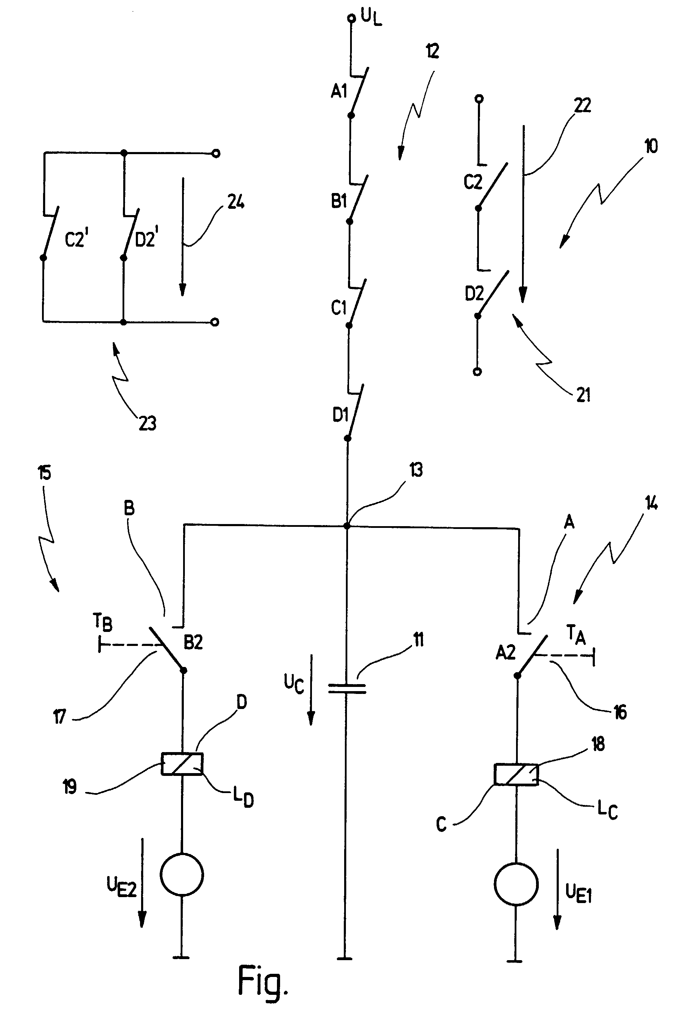

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert.

Die einzige Figur zeigt eine Prinzipdarstellung der neuen Schaltung.

Die in der einzigen Figur gezeigte fehlersichere Schaltung 10 umfaßt einen Speicher 11 in Form eines Kondensators. Der Kondensator 11 ist über eine Aufladestrecke 12 mit einer Betriebsspannung U_{L} der neuen Schaltung 10 verbunden. An seiner Verbindungsstelle 13 zu der Aufladestrecke 13 ist der Kondensator 11 ferner mit einer ersten Entladestrecke 14 sowie mit einer zweiten Entladestrecke 15 verbunden. Die erste Entladestrecke 14 ist über ein Entladepotential U_{E1} mit Masse verbunden, und die zweite Entladestrecke 15 ist über ein Entladepotential U_{E2} mit Masse verbunden.

Die Schaltung 10 dient dazu, die Quasi-Gleichzeitigkeit zweier Schaltereignisse T_{A} und T_{B} zu überwachen. Zu diesem Zweck umfaßt sie ein erstes Schaltmittel 16 in Form eines Sicherheitstasters A, der einen Ruhekontakt A1 in der Aufladestrecke 12 sowie einen Schließkontakt A2 in der ersten Entladestrecke 14 umfaßt. Der Sicherheitstaster A wird durch das erste Schaltereignis T_{A} betätigt.

Ferner sind zweite Schaltmittel 17 in Form eines Sicherheitstasters B vorgesehen, der durch das Schaltereignis T_{B} betätigt wird und einen Ruhekontakt B1 in der Aufladestrecke 12 sowie einen Schließkontakt B2 in der zweiten Entladestrecke 15 umfaßt.

Ferner sind dritte Schaltmittel 18 in Form eines Sicherheitsrelais C vorgesehen, das mit seiner Betätigungsspule L_{C} in der ersten Entladestrecke 14 liegt sowie einen Ruhekontakt C1 in der Aufladestrecke 12 aufweist. Vierte Schaltmittel 19 in Form eines Sicherheitsrelais D liegen mit ihrer Betätigungsspule L_{D} in der zweiten Entladestrecke 15 sowie mit einem Ruhekontakt D1 in der Aufladestrecke 12.

Sämtliche Ruhekontakte A1, B1, C1 und D1 in der Aufladestrecke 12 sind in Reihe zwischen die Betriebsspannung U_{L} und den Kondensator 11 geschaltet, so daß der Kondensator 11 im Ruhezustand aller vier Schaltmittel A, B, C und D auf die Betriebs-Spannung U_{L} aufgeladen wird. Die Schließkontakte A2 und B2 liegen in Reihe mit den Betätigungsspulen L_{C} bzw. L_{D}, so daß beim Schließen eines der Taster A oder B zwischen dem Kondensator 11 und den Entladepotentialen U_{E1} bzw. U_{E2} ein Ausgleichsstrom durch die Betätigungsspulen L_{C} bzw. L_{D} fließt. Ist dieser Ausgleichsstrom groß genug, so zieht das Sicherheitsrelais C bzw. D an. Die dritten und vierten Schaltmittel 18, 19 weisen ferner zweite Schaltkontakte auf, die als in Reihe geschaltete Schließkontakte C2, D2 oder als parallel geschaltete Ruhekontakte C2', D2' ausgebildet sein können. Bei 21 ist ein Ausgangskreis der neuen Schaltung 10 angedeutet, der eine Spannung 22 durchschaltet, wenn beide Schließkontakte C2 und D2 geschlossen sind. Alternativ kann ein Ausgangskreis 23 vorgesehen sein, der eine Spannung 24 wegschaltet, wenn beide Ruhekontakte C2' und D2' betätigt wurden.

Dadurch, daß die ersten, zweiten, dritten und vierten Schaltmittel 16, 17, 18 und 19 als Sicherheitstaster A, B bzw. als Sicherheitsrelais C, D ausgebildet sind, herrscht bei allen Schaltmitteln zwangsgeführte Antivalenz bzw. Äquivalenz zwischen den ersten Schaltkontakten A1, B1, C1, D1 und den zweiten Schaltkontakten A2, B2, C2, D2; C2', D2' vor. Mit anderen Worten, die ersten Schaltkontakte A1, B1, C1, D1 befinden sich nur dann in ihrer Ruheposition, wenn sich auch die zweiten Schaltkontakte A2, B2, C2, D2; C2', D2' in ihrer Ruheposition befinden. Gleiches gilt für die Betriebspositionen sämtlicher Schaltkontakte.

Die Funktion der neuen Schaltung 10 ist wie folgt:
Im Ruhezustand, wenn beide Schaltereignisse T_{A} und T_{B} noch nicht erfolgt sind, wird der Kondensator 11 über die Reihenschaltung der Ruhekontakte A1, B1, C1, D1 auf die Betriebsspannung U_{L} aufgeladen. Sollte eines der vier Schaltmittel A, B, C, D während des letzten Schaltwechsels in seiner Betriebsstellung hängengeblieben sein, wäre der entsprechende Ruhekontakt nicht geschlossen, so daß der Kondensator 11 nicht geladen würde.

Wird jetzt eines der beiden Schaltereignisse T_{A}, T_{B} ausgelöst, so wird einer der Taster A, B betätigt. Es sei angenommen, daß dies der Taster A ist.

Durch das Schließen des Tasters A öffnet sich der Ruhekontakt A1, während sich der Schließkontakt A2 schließt. Dadurch wird der Kondensator 11 zum einen von der Betriebsspannung U_{L} abgekoppelt und zum anderen über die Spule L_{C} gegen das Potential U_{E1} entladen. Der Einfachheit halber sei im folgenden angenommen, daß die Spannungen U_{E1} und U_{E2} durchgeschaltet seien, so daß die Betätigungsspulen L_{C} und L_{D} direkt auf Masse liegen.

Der Kondensator 11 entlädt sich jetzt also über die Betätigungsspule L_{C} gegen Masse. Der dabei durch die Betätigungsspule L_{C} fließende Strom reicht aus, um das Sicherheitsrelais C zu schalten, so daß sich der Ruhekontakt C1 öffnet und der zweite Kontakt C2, C2' ebenfalls betätigt wird. Dieses Entladen des Kondensators 11 erfolgt mit einer Zeitkonstante, die durch die Kapazität des Kondensators 11 sowie den ohmschen Innenwiderstand der Betätigungsspule L_{C} bestimmt ist. Das Entladen des Kondensators 11 erfolgt nach der bekannten exponentiellen Funktion, so daß die Spannung U_{C} mit der Zeit abnimmt.

Nach Verlauf einer bestimmten Zeitspanne, während derer die Spannung U_{C} auf einen bestimmten Betrag unterhalb von U_{L} abgesunken ist, findet jetzt das zweite Schaltereignis T_{B} statt. Der zweite Sicherheitstaster B schaltet, so daß sich der Ruhekontakt B1 öffnet und der Schließkontakt B2 schließt. Der Kondensator 11 wird jetzt parallel auch über die Betätigungsspule L_{D} in der zweiten Entladestrecke 15 entladen. Wenn die Spannung U_{C} und die Ladung des Kondensators 11 zu diesem Zeitpunkt noch hinreichend groß sind, reicht der jetzt durch die Betätigungsspule L_{D} fließende Strom aus, um auch das zweite Sicherheitsrelais 19 zu schalten. Das bedeutet, daß sich nicht nur der Ruhekontakt D1 öffnet, sondern daß auch der zweite Schaltkontakt D2, D2' schaltet, so daß die Ausgangskreise 21 bzw. 23 das weitere Schaltereignis auslösen.

War jedoch zwischen dem ersten Schaltereignis T_{A} und dem zweiten Schaltereignis T_{B} eine zu große Zeitspanne vergangen, waren die Spannung U_{C} oder die Ladung also unter einen kritischen Wert abgesunken, reicht der Entladestrom des Kondensators 11 nicht mehr aus, auch noch die Betätigungsspule L_{D} so weit anzuregen, daß das zweite Sicherheitsrelais D noch schaltet. Auf diese Weise kann über die Wahl der Kapazität des Kondensators 11 sowie über den vorgegebenen Innenwiderstand der Betätigungsspulen L_{C} bzw. L_{D} die Zeitspanne vorgegeben werden, innerhalb derer beide Schaltereignisse T_{A} und T_{B} stattgefunden haben müssen, damit die Ausgangskreise 21 bzw. 23 das weitere Schaltereignis auslösen.

Durch die zwangsgeführte Antivalenz bzw. Äquivalenz der Schaltmittel A, B, C und D ist dafür gesorgt, daß bei einem Hängenbleiben eines der Schaltmittel A, B, C und D sowie bei dem Bruch eines der Schaltkontakte entweder der Kondensator 11 nicht mehr geladen wird oder aber die Entladung des Kondensators 11 über beide Entladestrecken 14, 15 nicht mehr möglich ist. Durch die Anordnung der zweiten Schaltkontakte C2, D2; C2', D2' der dritten und vierten Schaltmittel 18 und 19 in den Ausgangskreisen 21 bzw. 23 ist ferner dafür gesorgt, daß nur dann ein weiteres Schaltereignis ausgelöst wird, wenn beide Sicherheitsrelais C und D angezogen haben.

Bei einer vorgegebenen maximalen Zeitspanne, die zwischen den beiden Schaltereignissen T_{A} und T_{B} vergehen darf, wird der Kondensator 11 hinsichtlich seiner Nennkapazität so ausgewählt, daß die tatsächlich zulässige Zeitspanne, die sich aus dieser Nennkapazität und dem Innenwiderstand der Betätigungsspulen L_{C} bzw. L_{D} ergibt, gerade der maximal zulässigen Zeitspanne entspricht.

Probleme hinsichtlich der ohmschen Innenwiderstände der Betätigungsspulen L_{C} und L_{D} im Zusammenhang mit der vorgegebenen Zeitspanne sind nicht zu erwarten. Wären statt der Betätigungsspulen L_{C}, L_{D} dagegen rein ohmsche Widerstände vorgesehen, so müßte als Fehlerannahme eine deutliche Erhöhung der Widerstände betrachtet werden, so daß die Zeitkonstante und damit die aktuelle Zeitspanne über mehrere Größenordnungen variieren könnten, so daß die maximale Zeitspanne deutlich überschritten würde.

Bei einer Drift der Innenwiderstände der Betätigungsspulen L_{C}, L_{D} wird dieser Fehlerzustand jedoch dadurch überwacht, daß die Sicherheitsrelais C, D nicht mehr ansprechen, wenn sich die ohmschen Innenwiderstände verändern. Mit anderen Worten, eine Veränderung der ohmschen Widerstände ist auch bei der neuen Schaltung 10 nicht ausgeschlossen, diese Veränderung führt jedoch nicht zu einer Vergrößerung der aktuellen Zeitspanne, die zwischen den beiden Schaltereignissen T_{A} sowie T_{B} liegen darf, sondern verhindert ein fehlerhaftes Auslösen des weiteren Schaltereignisses dadurch, daß das Sicherheitsrelais C bzw. D nicht mehr anzieht, bei dem diese Widerstandsänderung stattgefunden hat.

## Patentansprüche

1. Fehlersichere Schaltung, die in Abhängigkeit von einer Quasi-Gleichzeitigkeit zumindest zweier Schaltereignisse (T_{A}, T_{B}) zumindest ein weiteres Schaltereignis (22, 24) auslöst, wobei für beide Schaltereignisse (T_{A}, T_{B}) ein gemeinsamer Speicher (11) für elektrische Ladung vorgesehen ist und wobei die Schaltereignisse (Tₐ, T_{B}) von zumindest zwei, Betätigungsspulen (L_{C}, L_{D}) aufweisenden Schaltmitteln (18, 19) ausgelöst werden, dadurch gekennzeichnet, daß der Speicher (11) mit den Betätigungsspulen (L_{C}, L_{D}) derart verschaltet ist, daß der Speicher (11) bei Eintritt eines oder beider der Schaltereignisse (T_{A}, T_{B}) über ein bzw. beide Betätigungsspulen (L_{C}, L_{D}) umgeladen wird, wobei die Schaltmittel (18, 19) das weitere Schaltereignis nur auslösen, wenn sie beide in Arbeitsstellung sind.

2. Schaltung nach Anspruch 1, gekennzeichnet durch:
- eine erste Ladestrecke (12), die den Speicher (11) wahlweise mit einem ersten Potential (U_{L}) verbindet,
- eine zweite Ladestrecke (14), die den Speicher (11) wahlweise mit einem zweiten Potential (U_{E1}) verbindet,
- zumindest eine dritte Ladestrecke (15), die den Speicher (11) wahlweise mit einem dritten Potential (U_{E2}) verbindet,
- ein erstes, in Abhängigkeit von dem ersten Schaltereignis (T_{A}) arbeitendes Schaltmittel (16), das einen ersten Schaltkontakt (A1) in der ersten Ladestrecke (12) und einen zweiten Schaltkontakt (A2) in der zweiten Ladestrecke (14) aufweist, und
- zumindest ein zweites, in Abhängigkeit von dem zweiten Schaltereignis (T_{B}) arbeitendes Schaltmittel (17), das einen ersten Schaltkontakt (B1) in der ersten Ladestrecke (12) und einen zweiten Schaltkontakt (B2) in der dritten Ladestrecke (15) aufweist,
wobei:
- eines der auslösenden Schaltmittel (18, 19) als drittes Schaltmittel (18) mit seiner Betätigungsspule (L_{C}) in der zweiten Ladestrecke (14) liegt und einen ersten Schaltkontakt (C1) in der ersten Ladestrecke (12) sowie einen zweiten Schaltkontakt (C2; C2') aufweist,
- ein anderes der auslösenden Schaltmittel (18, 19) als viertes Schaltmittel (19) mit seiner Betätigungsspule (L_{D}) in der dritten Ladestrecke (15) liegt und einen ersten Schaltkontakt (D1) in der ersten Ladestrecke (12) sowie einen zweiten Schaltkontakt (D2; D2') aufweist,
- alle ersten Schaltkontakte (A1, B1, C1, D1) in der ersten Ladestrecke (12) so verschaltet sind, daß sie ein Laden des Speichers (11) auf das erste Potential (U_{L}) nur ermöglichen, wenn sie alle in ihrer Ruhestellung sind,
- die Betätigungsspulen (L_{C}, L_{D}) und die zweiten Schaltkontakte (A2, B2) der ersten und zweiten Schaltmittel (16, 17) in der zweiten bzw. dritten Ladestrecke (14, 15) so verschaltet sind, daß die zweiten Schaltkontakte (A2, B2) in ihrer Arbeitsstellung den Speicher (11) über die jeweilige Betätigungsspule (L_{C}, L_{D}) auf das zugeordnete Ladepotential (U_{E1}, U_{E2}) umladen, und
- die zweiten Schaltkontakte (C2, D2; C2', D2') der dritten und vierten Schaltmittel (18, 19) derart verschaltet sind, daß das weitere Schaltereignis (22, 24) nur ausgelöst wird, wenn beide zweiten Schaltkontakte (C2, D2; C2', D2') in ihrer Arbeitsstellung sind.

3. Schaltung nach Anspruch 2, dadurch gekennzeichnet, daß das zweite und das dritte Potential (U_{E1}, U_{E2}) identisch sind.

4. Schaltung nach Anspruch 3, dadurch gekennzeichnet, daß das zweite und das dritte Potential (U_{E1}, U_{E2}) auf Masse-potentialen liegen und daß das erste Potential (U_{L}) einer Betriebsspannung der Schaltung (10) entspricht.

5. Schaltung nach einem der Ansprüche 2 bis 4, dadurch gekennzeichnet, daß die ersten und zweiten Schaltkontakte (A1, B1, C1, D1; A2, B2, C2, C2', D2, D2') eines jeden Schaltmittels (16, 17, 18, 19) zwangsgeführt ihren Schaltzustand gemeinsam ändern.

6. Schaltung nach einem der Ansprüche 2 bis 5, dadurch gekennzeichnet, daß die ersten und zweiten Schaltkontakte (A1, B1, C1, D1; A2, B2, C2, C2', D2, D2') eines jeden Schaltmittels (16, 17, 18, 19) eine zwangsgeführte Antivalenz aufweisen, so daß die ersten Schaltkontakte (A1, B1, C1, D1) geschlossen sind, wenn die zweiten Schaltkontakte (A2, B2, C2, D2) geöffnet sind, und umgekehrt.

7. Schaltung nach einem der Ansprüche 2 bis 6, dadurch gekennzeichnet, daß die ersten und die zweiten Schaltmittel (16, 17) Sicherheitstaster (A, B) sind.

8. Schaltung nach einem der Ansprüche 2 bis 7, dadurch gekennzeichnet, daß die dritten und vierten Schaltmittel (18, 19) als Sicherheitsrelais (C, D) ausgebildet sind.

9. Schaltung nach einem der Ansprüche 2 bis 8, dadurch gekennzeichnet, daß alle ersten Schaltkontakte (A1, B1, C1, D1) Ruhekontakte sind, die in Serie zwischen das erste Potential (U_{L}) und den Speicher (11) geschaltet sind.

10. Schaltung nach einem der Ansprüche 2 bis 9, dadurch gekennzeichnet, daß die zweiten Schaltkontakte (A2, B2) der ersten und zweiten Schaltmittel (16, 17) Schließkontakte sind, die in Serie mit der jeweiligen Betätigungsspule (L_{C}, L_{D}) geschaltet sind.

11. Schaltung nach einem der Ansprüche 2 bis 10, dadurch gekennzeichnet, daß die zweiten Schaltkontakte (C2, D2) der dritten und vierten Schaltmittel (18, 19) in Serie geschaltete Schließkontakte sind.

12. Schaltung nach einem der Ansprüche 2 bis 10, dadurch gekennzeichnet, daß die zweiten Schaltkontakte (C2', D2') der dritten und vierten Schaltmittel (18, 19) parallel geschaltete Ruhekontakte sind.

## Claims

1. A fail-safe circuit which triggers at least a further switching event (22, 24) as a function of a quasi-simultaneity of at least two switching events (T_{A}, T_{B}), wherein for both switching events (T_{A}, T_{B}) a common storage (11) for electrical charges is provided and wherein the switching events (T_{A}, T_{B}) are triggered by at least two switching devices (18, 19) provided with actuation coils (L_{C}, L_{D}), characterized in that the storage (11) is connected with the actuating coils (L_{C}, L_{D}) such that in the event of one or both switching events (T_{A}, T_{B}) the storage (11) is reverse charged via one or both actuation coils (L_{C}, L_{D}), wherein the switching devices (18, 19) only trigger the further switching event if they are both in their working position.

2. Circuit according to claim 1, characterized by:
- a first charging path (12) which connects the storage (11) selectively to a first potential (U_{L}),
- a second charging path (14) which connects the storage (11) selectively to a second potential (U_{E1}),
- at least a third charging path (15) which selectively connects the storage (11) to a third potential (U_{E2}),
- a first switching device (16) which operates as a function of the first switching event (T_{A}) and which has a first switching contact (A1) in the first charging path (12) and a second switching contact (A2) in the second switching path (24), and
- at least a second switching device (17) which operates as a function of the second switching event (T_{B}) and which has a first switching contact (B1) in the first charging path (12) and a second switching contact (B2) in the third switching path (15),
whereby:
- one of the triggering switching devices (18, 19) is located as third switching device (18) with its actuation coil (L_{C}) in the second charging path (14) and has a first switching contact (C1) in the first charging path (12) as well as a second switching contact (C2; C2'),
- another of the triggering switching device (18, 19) is located as fourth switching device (19) with its actuation coil (L_{D}) in the third charging path (15) and has a first switching contact (D1) in the first charging path (12) as well as a second switching contact (D2; D2'),
- all of the first switching contacts (A1, B1, C1, D1) in the first charging path (12) are interconnected such that they only allow a charging of storage (11) to the first potential (U_{L}) if all of them are in their neutral position,
- the actuation coils (L_{C}, L_{D}) and the second switching contacts (A2, B2) of the first and second switching devices (16, 17) in the second and third charging paths (14, 15) respectively, are interconnected such that the second switching contacts (A2, B2) in their working position reverse charge the storage (11) over the respective actuation coil (L_{C}, L_{D}) to the associated charging potential (U_{E1}, U_{E2}), and
- the second switching contacts (C2, D2; C2', D2') of the third and fourth switching means (18, 19) are interconnected such that the further switching event (22, 24) is only triggered when both second switching contacts (C2, D2; C2', D2') are in their working position.

3. Circuit according to claim 2, characterized in that the second and third potential (U_{E1}, U_{E2}) are identical.

4. Circuit according to claim 3, characterized in that the second and third potential (U_{E1}, U_{E2}) are connected to earth potentials and that the first potential (U_{L}) corresponds to a supply voltage of the circuit (10).

5. Circuit according to any of claims 2 - 4, characterized in that the first and second switching contacts (A1, B1, C1, D1; A2, B2, C2, C2', D2, D2') of each switching device (16, 17, 18, 19) are forced to jointly change their switching status.

6. Circuit according to any of claims 2 -5, characterized in that the first and second switching contacts (A1, B1, C1, D1; A2, B2, C2, C2', D2, D2') of each switching device (16, 17, 18, 19) display a compulsory antivalence, such that the first switching contacts (A1, B1, C1, D1) are closed when the second switching contacts (A2, B2, C2, D2) are open, and vice versa.

7. Circuit according to any of claims 2 - 6, characterized in that the first and second switching devices (16, 17) are safety buttons (A, B).

8. Circuit according to any of claims 2 - 7, characterized in that the third and fourth switching devices (18, 19) are constructed as safety relays.

9. Circuit according to any of claims 2 - 8, characterized in that all of the first switching contacts (A1, B1, C1, D1) are break contacts which are connected in series between the first potential (U_{L}) and the storage (11).

10. Circuit accordance to any of claims 2 - 9, characterized in that the second switching contacts (A2, B2) of the first and second switching devices (16, 17) are make contacts which are connected in series with the respective actuation coils (L_{C}, L_{D}).

11. Circuit according to any of claims 2 - 10, characterized in that the second switching contacts (C2, D2) of the third and fourth switching devices (18, 19) are make contacts switched in series.

12. Circuit according to any of claims 2 - 10, characterized in that the second switching contacts (C2', D2') of the third and fourth switching devices (18, 19) are break contacts switched in parallel.

## Revendications

1. Circuit protégé contre les défauts, qui déclenche, en fonction d'une quasi-simultanéité d'au moins deux événements de commutation (T_{A}, T_{B}), au moins un autre événement de commutation (22, 24), un accumulateur (11) commun pour une charge électrique étant prévu pour les deux événements de commutation (T_{A}, T_{B}) et les événements de commutation (T_{A}, T_{B}) étant déclenchés par au moins deux moyens de commutation (18, 19) comportant des bobines d'actionnement (L_{C}, L_{D}), caractérisé en ce que l'accumulateur (11) est mis en circuit avec les bobines d'actionnement (L_{C}, L_{D}), de manière que lorsque surviennent l'un des événements de commutation (T_{A}, T_{B}), ou les deux, l'accumulateur (11) est rechargé respectivement par l'une ou les deux bobines d'actionnement (LC, L_{D}), les moyens de commutation (18, 19) ne déclenchant l'autre événement de commutation que lorsque tous deux se trouvent en position de travail.

2. Circuit selon la revendication 1, caractérisé par:
- une première section de charge (12) qui relie l'accumulateur (11) sélectivement avec un premier potentiel (U_{L}),
- une deuxième section de charge (14) qui relie l'accumulateur (11) sélectivement avec un deuxième potentiel (U_{E1}),
- au moins une troisième section de charge (15) qui relie l'accumulateur (11) sélectivement avec un troisième potentiel (U_{E2}),
- un premier moyen de commutation (16), fonctionnant en fonction du premier événement de commutation (T_{A}), qui comporte un premier contact de commutation (A1) dans la première section de charge (12) et un deuxième contact de commutation (A2) dans la deuxième section de charge (14), et
- au moins un deuxième moyen de commutation (17), fonctionnant en fonction du deuxième événement de commutation (T_{B}), qui comporte un premier contact de commutation (B1) dans la première section de charge (12) et une deuxième contact de commutation (B2) dans la troisième section de charge (15),
dans lequel:
- l'un des moyens de commutation (18, 19) de déclenchement se situe, en tant que troisième moyen de commutation (18), avec sa bobine d'actionnement (L_{C}) dans la deuxième section de charge (14) et comporte un premier contact de commutation (C1) dans la première section de charge (12) ainsi qu'un deuxième contact de commutation (C2 ; C2'),
- un autre des moyens de commutation (18, 19) de déclenchement se situe, en tant que quatrième moyen de commutation (19), avec sa bobine d'actionnement (L_{D}) dans la troisième section de charge (15) et comporte un premier contact de commutation (D1) dans la première section de charge (12) ainsi qu'un deuxième contact de commutation (D2 ; D2'),
- tous les premiers contacts de commutation (A1, B1, C1, D1) situés dans la première section de charge (12) sont montés en circuit de manière à ne permettre une charge de l'accumulateur (11) sur le premier potentiel (U_{L}) que lorsqu'ils se trouvent tous dans leur position de repos,
- les bobines d'actionnement (L_{C}, L_{D}) et les deuxièmes contacts de commutation (A2, B2) des premiers et des deuxièmes moyens de commutation (16, 17) sont montés respectivement dans la deuxième et la troisième sections de charge (14, 15), de manière que les deuxièmes contacts de commutation (A2, B2) dans leur position de travail rechargent l'accumulateur (11) par la bobine d'actionnement (L_{C,} L_{D}) correspondante, sur le potentiel de charge (U_{E1}, U_{E2}) correspondant, et
- les deuxièmes contacts de commutation (C2, D2 ; C2', D2') des troisièmes et quatrièmes moyens de commutation (18, 19) sont montés de manière que l'autre événement de commutation (22, 24) n'est déclenché que lorsque les deux deuxièmes contacts de commutation (C2, D2 ; C2', D2') se trouvent dans leur position de travail.

3. Circuit selon la revendication 2, caractérisé en ce que le deuxième et le troisième potentiels (U_{E1}, U_{E2}) sont identiques.

4. Circuit selon la revendication 3, caractérisé en ce que le deuxième et le troisième potentiels (U_{E1}, U_{E2}) se trouvent à des potentiels de masse et en ce que le premier potentiel (U_{L}) correspond à une tension de service du circuit (10).

5. Circuit selon l'une des revendications 2 à 4, caractérisé en ce que les premiers et les deuxièmes contacts de commutation (A1, B1, C1, D1 ; A2, B2, C2, C2', D2, D2') de chaque moyen de commutation (16, 17, 18, 19) modifient conjointement leur état de commutation, ceci d'une manière forcée.

6. Circuit selon l'une des revendications 2 à 5, caractérisé en ce que les premiers et les deuxièmes contacts de commutation (A1, B1, C1, D1 ; A2, B2, C2, C2', D2, D2'), de chaque moyen de commutation (16, 17, 18, 19) présentent une antivalence forcée, de sorte que les premiers contacts de commutation (A1, B1, C1, D1) sont fermés, lorsque les deuxièmes contacts de commutation (A2, B2, C2, C2', D2, D2') sont ouverts et inversement.

7. Circuit selon l'une des revendications 2 à 6, caractérisé en ce que les premiers et les deuxièmes moyens de commutation (16, 17) sont des interrupteurs à touche de sécurité (A, B).

8. Circuit selon l'une des revendications 2 à 7, caractérisé en ce que les troisièmes et quatrièmes moyens de commutation (18, 19) sont conformés en relais de sécurité (C, D).

9. Circuit selon l'une des revendications 2 à 8, caractérisé en ce que tous les premiers contacts de commutation (A1, B1, C1, D1) sont des contacts de repos, qui sont montés en série entre le premier potentiel (U_{L}) et l'accumulateur (11).

10. Circuit selon l'une des revendications 2 à 9, caractérisé en ce que les deuxièmes contacts de commutation (A2, B2) des premiers et deuxièmes moyens de commutation (16, 17) sont des contacts à fermeture, qui sont montés en série avec la bobine d'actionnement (L_{C}, L_{D}) respective.

11. Circuit selon l'une des revendications 2 à 10, caractérisé en ce que les deuxièmes contacts de commutation (C2, D2) des troisièmes et quatrièmes moyens de commutation (18, 19) sont des contacts à fermeture montés en série.

12. Circuit selon l'une des revendications 2 à 10, caractérisé en ce que les deuxièmes contacts de commutation (C2', D2') des troisièmes et quatrièmes moyens de commutation (18, 19) sont des contacts de repos montés en parallèle.
